# EUROPEAN PATENT SPECIFICATION

(11) **EP 1 956 404 B1**
(45) Date of publication and mention of the grant of the patent: **16.05.2012**
(21) Application number: 07300781.7
(22) Date of filing: 08.02.2007
(51) Int. Cl.: G02B 6/44, H01B 7/295

(54) **Slotted core with improved fire properties for a cable use**
Geschlitzter Kern mit verbesserter Feuerbeständigkeit
Noyau à encoches avec propriétés ignifuges améliorées

(43) Date of publication of application: 13.08.2008
(73) Proprietor: Nexans, 75008 Paris (FR)
(72) Inventor: Gunnarsson, Magnus, SE-514 70 Grimsas (SE); Emanuelsson, Victor, SE-514 42 Limmared (SE); Elisson, Peter, SE-50430 Boras (SE); Hallden, Ulrika, SE-51461 Dalstorp (SE); Eriksson, Alf, SE-51470 Grimsas (SE)
(74) Representative: Feray, Valérie

(56) References cited:
- EP-A1- 1 634 920
- EP-A2- 0 284 900
- WO-A-01/36176
- DE-A1- 19 542 157
- US-A- 4 814 133
- US-A- 5 378 856
- US-A- 5 707 732
- US-A- 5 920 672
- US-B1- 6 236 791
- US-B1- 6 492 453

## Description

The present invention relates to a slotted core and a slotted core optical cable.

The document AU-B-21965/83 deals with an optical fiber cable comprising optical units, a spacer having continuous helical grooves on the surface for receiving said optical units and a tensile-strength central member.

Said spacer, or in other words said slotted core, is made from polyethylene, nylon, fluorocarbon polymers or polyvinyl chloride.

However such slotted core optical cable does not have optimized fire performance to comply, for example, with the current European construction product directives 2006/751/EC.

The document US 6 236 791 discloses a flame-retardant optical cable including a slotted core made from a halogen free flame retardant material, said slotted core surrounding directly a central strength member.

However, said slotted core does not have as well optimized fire performance.

The present invention seeks to overcome the drawback of the prior art in providing a improved slotted core, for use in a slotted core optical cable, comprising at least one groove extending along the outer surface of said core, with a new type of material capable of presenting a limited combustion and of preventing a decrease in mechanical strength in the optical fibers when the optical cable is subjected to bending.

To this end, an object of the present invention is to provide a slotted core as defined in claim 1.

The slotted core according to the present invention is partially made from a halogen free flame retardant material.

The slotted core of the present invention, made from halogen free flame retardant material in part, aims at guarantying a quantity of combustible material as small as possible in slotted core, and more generally in slotted core optical cable.

Advantageously, the slotted core according to the present invention presents a Limiting Oxygen Index of at least 25.

The halogen free flame retardant material comprises generally a polymeric matrix and at least one inorganic filler, and aims at delaying the flame propagation in case of fire.

By example, said inorganic filler comprises a flame retardant filler, such as a metallic hydroxide, and/or an extender, such as calcium carbonate or talcum.

In a preferred embodiment, the polymeric matrix is made of polyethylene or polypropylene.

Another object of the present invention is a slotted core optical cable comprising said slotted core, at least one optical fiber housed within said groove, and an outer sheath surrounding said slotted core.

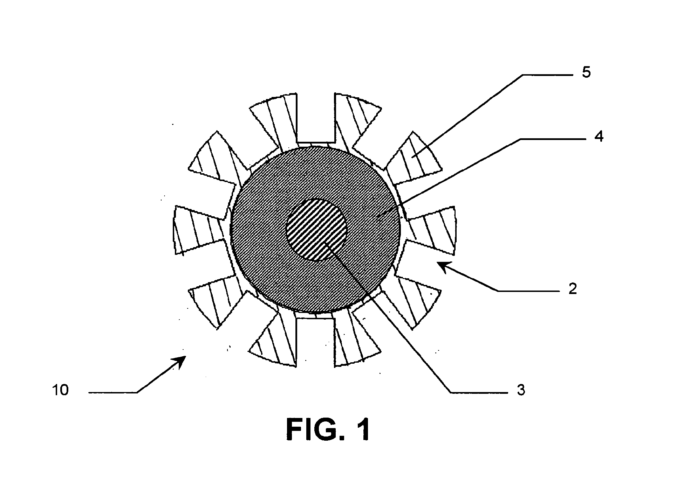

Other characteristics and advantages of the invention are described below in detail in the following description, which is given by way of nonlimiting illustration, taken in conjunction with the drawing, in which
- FIG. 1 is a cross sectional view illustrating a slotted core according to an embodiment of the present invention.

The figure 1 shows an example of a slotted core 10 according to the present invention.

Said slotted core 10 comprises advantageously any suitable polymer known in the art to make a halogen free flame retardant material.

For example, said slotted core is made from a high density, medium density or low density polyethylene matrix, in which inorganic filler is added.

The inorganic filler is preferably a mixture of silicone, calcium carbonate and talcum; a mixture of silicone, calcium carbonate, magnesium stearate and titanium dioxide; or a mixture of silicone, aluminium hydroxide, magnesium hydroxide and magnesium stearate.

Other examples of halogen free flame retardant material are described in the patent document EP-0 774 487.

As represented on figure 1, said slotted core 10 comprises a first layer 4 and a second layer 5, said second layer 5 surrounding said first layer 4.

After the extrusion of the first layer 4, the second layer 5 is extruded around said first layer 4. In other words, it is a two-process extrusion,

The second layer 5 comprises ten grooves 2 extending longitudinally along the outer surface of said slotted core 10.

The design of said slotted core 10 is a partial halogen free flame retardant content with sufficient flame retardant property.

The first layer 4 is made from halogen free flame retardant material. For example, the first layer 4 is made respectively from a polymer material, in other words a no-flame retardant material, such as medium density polyethylene or high density polyethylene without any flame retardant filler or extender.

The second layer 5 is made from halogen free flame retardant material.

In the preferred embodiment represented in figure 1, the slotted core 10 comprises a central strength member 3, the first layer 4 being extruded on said central strength member 3. Hence, said central strength member 3 is embedded coaxially with said slotted core 10.

By a way of example, said central strength member is a fiber glass reinforced plastic or a twisted metal core comprising a plurality of twisted metal wires.

Said slotted core is used in a slotted core optical cable (not shown). Said slotted core optical cable comprises a slotted core according to the present invention, at least one optical fiber housed within said groove, and an outer sheath surrounding said slotted core.

An optical cable typically includes a plurality of optical fibers and a protective member for protecting the optical fibers.

Said slotted core optical cable can house single-fiber optical cable, loose tube optical cables and/or ribbon optical cables.

The single-fiber optical cable is used as a wiring for an apparatus or as wiring means between apparatuses. The single-fiber optical cable includes an optical fiber and a cladding layer formed on the optical fiber.

The loose tube optical cable is formed by binding a plurality of loose tubes including a plurality of optical fibers therein.

The ribbon optical cable includes a ribbon optical fiber bundle having at least one ribbon optical fiber. In general, the ribbon optical cable includes a plurality of optical fibers aligned in series and a coating layer coated on the optical fibers in order to bind the optical fibers.

The ribbon optical fiber bundle is formed by stacking a plurality of ribbon optical fibers.

The outer jacket, surrounding said slotted core, prevents the slotted core optical cable from being worn out due to external impact and protects also optical fibers of the slotted core optical cable from external environment.

For example, the outer jacket is made from extruded polymer materials, such as polyethylene.

In a variant, said outer jacket is made from a halogen free fire retardant material with a Limiting Oxygen Index of at least 35.

Advantageously, the slotted core optical cable of the present invention complies with the current European construction product directives 2006/751/EC.

Although the preferred embodiment of the present invention, such as represented on figure 1, has been disclosed for illustrative purposes, it is of course understood that departures can be made from this preferred embodiment by those of ordinary skill in the art without departing from the scope of the invention.

More particularly, the structure of said slotted core is not limited by its design.

## Claims

1. Slotted core (1,10) comprising at least one groove (2) extending along the outer surface of said core and a central strength member (3), **characterized in that** said slotted core comprises:
- a first layer (4) made from a no-flame retardant material, said first layer surrounding said strength member (3), and
- a second layer (5) made from a halogen free flame retardant material, said second layer (5) surrounding said first layer (4), and comprising said at least one groove (2).

2. Slotted core according to claim 1, **characterized in that** said halogen free flame retardant material comprises a polymeric matrix and at least one inorganic filler.

3. Slotted core according to claim 2, **characterized in that** said polymeric matrix is made of polyethylene or polypropylene.

4. Slotted core according to claim 2, **characterized in that** said inorganic filler comprises a flame retardant filler and/or an extender.

5. Slotted core according to any one of the preceding claims, **characterized in that** the first layer (4) is extruded on said central strength member (3).

6. Slotted core optical cable comprising:
- a slotted core as defined in claims 1 to 5,
- at least one optical fiber housed within said groove, and
- an outer sheath surrounding said slotted core.

## Patentansprüche

1. Geschlitzter Kern (1, 10), umfassend mindestens eine Nut (2), die sich entlang der äußeren Oberfläche des Kerns erstreckt, und ein zentrales Verstärkungselement (3), **dadurch gekennzeichnet, dass** der geschlitzte Kern Folgendes umfasst:
- eine erste Schicht (4), hergestellt aus einem nicht flammenhemmenden Material, wobei die erste Schicht das Verstärkungselement (3) umgibt, und
- eine zweite Schicht (5), hergestellt aus einem halogenfreien flammenhemmenden Material, wobei die zweite Schicht (5) die erste Schicht (4) umgibt und die mindestens eine Nut (2) umfasst.

2. Geschlitzter Kern nach Anspruch 1, **dadurch gekennzeichnet, dass** das halogenfreie flammenhemmende Material eine Polymermatrix und mindestens einen anorganischen Füllstoff umfasst.

3. Geschlitzter Kern nach Anspruch 2, **dadurch gekennzeichnet, dass** die Polymermatrix aus Polyethylen oder Polypropylen hergestellt ist.

4. Geschlitzter Kern nach Anspruch 2, **dadurch gekennzeichnet, dass** der anorganische Füllstoff einen flammenhemmenden Füllstoff und/oder ein Streckmittel umfasst.

5. Geschlitzter Kern nach einem der vorhergehenden Ansprüche, **dadurch gekennzeichnet, dass** die erste Schicht (4) auf dem zentralen Verstärkungselement (3) extrudiert ist.

6. Optisches Kabel mit geschlitztem Kern, umfassend:
- einen geschlitzten Kern, wie in Anspruch 1 bis 5 definiert,
- mindestens eine optische Faser, die in der Nut untergebracht ist; und
- eine äußere Hülle, die den geschlitzten Kern umgibt.

## Revendications

1. Noyau à encoches (1, 10) comprenant au moins une rainure (2) s'étendant le long de la surface externe dudit noyau et une membrure de force centrale (3), **caractérisé en ce que** ledit noyau à encoches comprend :
une première couche (4) réalisée à partir d'un matériau sans retardateur de flamme, ladite première couche entourant ladite membrure de force (3), et
une deuxième couche (5) réalisée à partir d'un matériau ignifuge sans halogène, ladite deuxième couche (5) entourant ladite première couche (4) et comprenant ladite au moins une rainure (2).

2. Noyau à encoches selon la revendication 1, **caractérisé en ce que** ledit matériau ignifuge sans halogène comprend une matrice polymère et au moins une matière de remplissage non organique.

3. Noyau à encoches selon la revendication 2, **caractérisé en ce que** ladite matrice polymère est réalisée à partir de polyéthylène ou de polypropylène.

4. Noyau à encoches selon la revendication 2, **caractérisé en ce que** ladite matière de remplissage non organique comprend une matière de remplissage à retardateur de flamme et/ou une matière de charge.

5. Noyau à encoches selon l'une quelconque des revendications précédentes, **caractérisé en ce que** la première couche (4) est extrudée sur ladite membrure de force centrale (3).

6. Câble optique à noyau à encoches comprenant :
un noyau à encoches selon les revendications 1 à 5,
au moins une fibre optique logée à l'intérieur de ladite rainure, et
une gaine externe entourant ledit noyau à encoches.
